# DEMANDE DE BREVET EUROPEEN

(11) **EP 1 263 148 A1**
(43) Date de publication de la demande: **04.12.2002**
(21) Numéro de dépôt: 02291308.1
(22) Date de dépôt: 29.05.2002
(51) Int. Cl.: H04B 1/40

(54) **Telephone portable multimodes a amplificateur d'emission unique**

(30) Priorité: 30.05.2001 FR 0107058
(71) Demandeur: SAGEM SA, 75116 Paris (FR)
(72) Inventeur: Romao, Fernando, 78360 Montesson (FR)
(74) Mandataire: Brykman, Georges

(57) **Abrégé**

Un téléphone portable (1) fonctionnant selon plusieurs modes et disposant à cette fin d'un premier (17) et d'un second (18) circuits d'antenne (2), est caractérisé en ce que les premier et second circuits (17, 18). d'antenne sont alimentés par un seul amplificateur d'émission. La sortie (5) de l'amplificateur (4) d'émission est connectée aux premier et second circuits d'antenne au travers d'une première (6) et d'une seconde (7) lignes quart d'onde (6, 7) respectivement. Chacune des lignes quart d'onde peut être court-circuitée par un moyen de commutation (34). On peut ainsi sélectionner le circuit d'antenne qui sera effectivement alimenté.

## Description

### Domaine technique

L'invention se situe dans le domaine des téléphones portables multimodes c'est-à-dire, pouvant fonctionner selon plusieurs modes et plusieurs fréquences, par exemple en mode GSM ou DCS fonctionnant en émission et réception en semi duplex, c'est-à-dire en temps partagé par périodes standard entre émission et réception ou en mode UMTS duplex total, dans lequel l'émission et la réception sont simultanées grâce à un duplexeur.

### Etat de la technique

Il existe actuellement des téléphones portables offrant des possibilités de fonctionnement selon plusieurs modes présents ensembles sur le même téléphone portable.

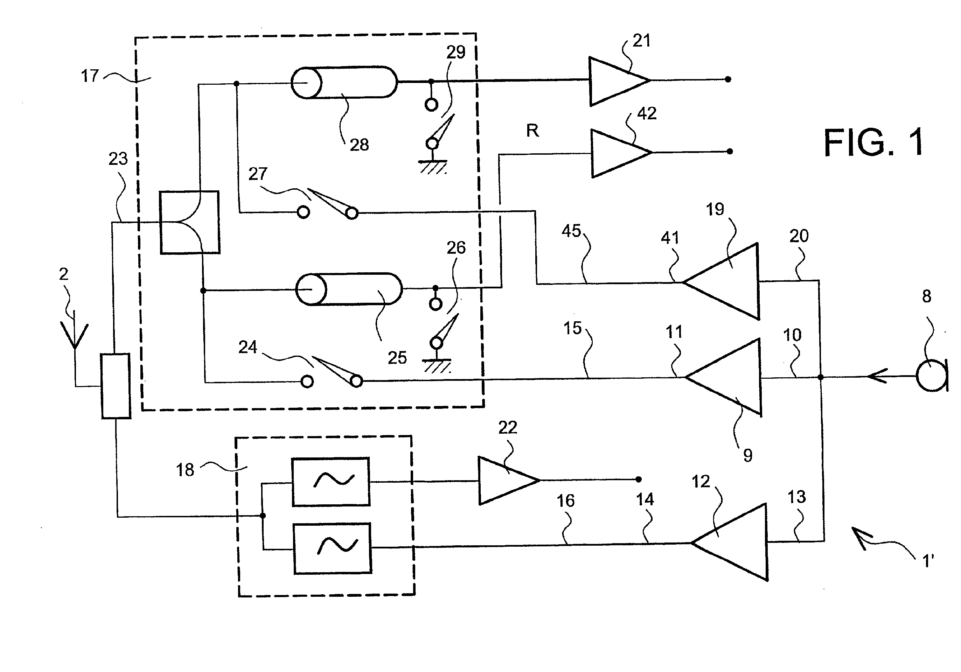

Un exemple d'un schéma électrique d'un tel téléphone portable 1' commune sera maintenant commentée en liaison avec la figure 1.

Cette figure est relative à un téléphone portable capable de travailler en mode GSM et DCS d'une part, et en mode UMTS d'autre part. La figure 1, concerne plus particulièrement la partie du circuit consacrée à l'émission c'est-à-dire la partie du circuit qui va d'une source d'un signal destiné à être émis, par exemple un microphone ou une source de données numériques 8 à une antenne 2.

La sortie d'un microphone ou de la source numérique 8 est couplée au travers d'éléments non représentés sur la figure 1 à des entrées 10, 20, 13 de trois amplificateurs 9, 19, 12 respectivement. Les sorties 11, 41 des amplificateurs 9, 19 respectivement sont connectées respectivement à des entrées 15, 45 d'un premier circuit d'antenne 17. Ce premier circuit d'antenne est ainsi utilisé lorsque le téléphone fonctionne en mode GSM ou DCS. L'amplificateur 9 peut être par exemple un amplificateur pour un fonctionnement DCS à une fréquence de 1800 MHz en émission et l'amplificateur 19 un amplificateur GSM pour un fonctionnement en émission à 900 MHz. De façon connue, ces modes fonctionnent en temps partagé. Chaque période de 4,6 millisecondes est partagée en un temps consacré à la réception, un temps consacré à l'émission et un temps de régulation. Cela se traduit dans la structure du circuit 17 par le fait que ce circuit est équipé de moyens de commutation permettant de diriger le signal en provenance du microphone au travers de l'amplificateur 9 ou 19 vers l'antenne pendant les temps consacrés à l'émission, et de diriger les signaux en provenance de l'antenne 2 vers un amplificateur 21 ou 42 consacré à la réception. L'amplificateur 42 est par exemple un amplificateur d'un circuit réception DCS à 1800 MHz et l'amplificateur 21 un amplificateur d'u circuit réception GSM à 900 MHz. Le mode de commutation de ce circuit sera expliqué plus loin.

De façon parallèle, le signal en provenance du microphone 8 est dirigé vers une entrée 13 d'un amplificateur 12 ayant une sortie 14 connectée à une entrée 16 d'un duplexeur 18. Ce duplexeur 18 constitue un second circuit d'antenne permettant de faire transiter le signal en duplex total d'une part, de l'entrée 16 d'émission à l'antenne 2 et, d'autre part, de l'antenne 2 à un amplificateur de réception 22. Le circuit 18 et l'amplificateur 12 sont utilisés lorsque le téléphone fonctionne par exemple en mode UMTS.

Le fonctionnement du circuit 17 pour réaliser le partage du temps entre émission et réception sera maintenant expliqué.

Le circuit 17 assure le fonctionnement en mode DCS et en mode GSM.

Lorsque le circuit fonctionne en mode, par exemple DCS, un signal en provenance de l'entrée 15 du circuit, est dirigé vers l'antenne 2 au travers d'un circuit comportant un interrupteur 24, cet interrupteur étant fermé en sorte que le signal peut aller de l'entrée 15 à une sortie 23 connectée à l'antenne. Il convient que le signal d'émission qui est un signal fort ne soit pas perçu par la réception, c'est-à-dire par l'amplificateur 21 qui amplifie les signaux en provenance de l'antenne 2. A cette fin le circuit 17 est équipé d'une ligne à retard quart d'onde 25. Cette ligne quart d'onde à la propriété de présenter une impédance infinie lorsqu'elle est court-circuitée et une impédance de ligne lorsqu'elle n'est pas court-circuitée. Afin d'empêcher le signal d'émission d'aller perturber les circuits de réception et notamment l'amplificateur 21, la ligne quart d'onde 25 est équipée d'un moyen 26 permettant de court-circuiter ladite ligne quart d'onde 25. Lorsque le circuit fonctionne en émission, l'interrupteur 26 est en position fermée et en conséquence la ligne quart d'onde 25 présente une impédance infinie. Il s'ensuit que le signal en provenance de l'entrée 15 ne peut se diriger que vers la sortie 23 du circuit 17 alimentant l'antenne 2. Lorsque le circuit fonctionne en mode réception, les interrupteurs 24 et 26 sont ouverts en sorte que le signal qui passe par l'entrée 23 en provenance de l'antenne 2, traverse la ligne quart d'onde 25 et va alimenter le circuit d'amplification 21. Une seconde ligne quart d'onde 28, un second interrupteur 27 et un second moyen 29 de court-circuit de la ligne dite quart d'onde 28 fonctionne de la même façon lorsque le téléphone est utilisé en mode GSM. Les moyens pour commander les interrupteurs 24, 27, 29, 26, sont en eux-mêmes connus et ne feront pas l'objet d'une description.

### Brève description de l'invention

On voit que le circuit qui vient d'être décrit en liaison avec la figure 1 nécessite deux amplificateurs, les amplificateurs 9 et 12 respectivement. Les fréquences amplifiées par ces amplificateurs sont voisines, il s'agit d'une fréquence à 1800 MHz en DCS et par exemple à 2000 MHz en UMTS. La présente invention vise un téléphone portable pouvant fonctionner selon plusieurs modes, dans lequel les deux amplificateurs 9 et 12 sont remplacés par un seul amplificateur.

A cette fin les amplificateurs 9 et 12 sont remplacés par un seul amplificateur dont la sortie peut être connectée au choix soit au premier circuit d'antenne 17, soit au second circuit d'antenne 18. Le fonctionnement restant le même par ailleurs. La connexion, par exemple, au circuit 17 est assurée au travers d'une première ligne quart d'onde. De même, la connexion au circuit 18 est assurée au travers d'une seconde ligne quart d'onde. Lorsque l'une de ces lignes quart d'onde est court-circuitée, elle présente une impédance infinie en sorte que le signal passe entièrement au travers de l'autre ligne quart d'onde. On peut ainsi sélectionner le premier ou le second circuit d'antenne. Pour cette sélection, il suffit de disposer d'un moyen de commutation commandable court-circuitant l'une ou l'autre des deux lignes quart d'onde.

En résumé, l'invention est relative à un téléphone portable multimode comportant une antenne d'émission réception un premier amplificateur d'émission ayant une entrée couplée à une source analogique ou numérique et amplifiant un signal en provenance de ladite source et une sortie couplée à une entrée d'un premier circuit d'antenne couplé à ladite antenne, au moins un second amplificateur d'émission ayant une entrée couplée à ladite source pour recevoir le signal en provenance de ladite source et une sortie couplée à une entrée d'un second circuit d'antenne couplé à ladite antenne, l'antenne recevant ou émettant des signaux vers le premier et le second circuits d'antenne, téléphone portable caractérisé en ce que le premier et le second amplificateurs sont confondus en un amplificateur unique et qu'une sortie dudit amplificateur unique est couplée aux entrées desdits premier et second circuits d'antenne respectivement par l'intermédiaire d'une ligne quart d'onde ayant chacune une entrée et une sortie, ladite entrée de chacune des lignes quart d'onde étant couplée à la sortie dudit amplificateur unique, la sortie de chacune de ces lignes quart d'onde étant couplée respectivement aux entrées desdits premier et second circuits d'antenne, et à un moyen commandable de mise en court circuit de l'une ou de l'autre des deux lignes quart d'onde.

Dans le mode préféré de réalisation, l'une au moins des lignes quart d'onde est utilisée, de plus, comme un élément de couplage, qui est un premier élément d'une boucle de contrôle automatique de gain de l'amplificateur unique.

### Brève description des dessins

La figure 1 déjà commentée est un schéma électrique exposant l'art antérieur.

La figure 2 est un schéma électrique comportant l'invention.

### Description détaillée d'un mode de réalisation

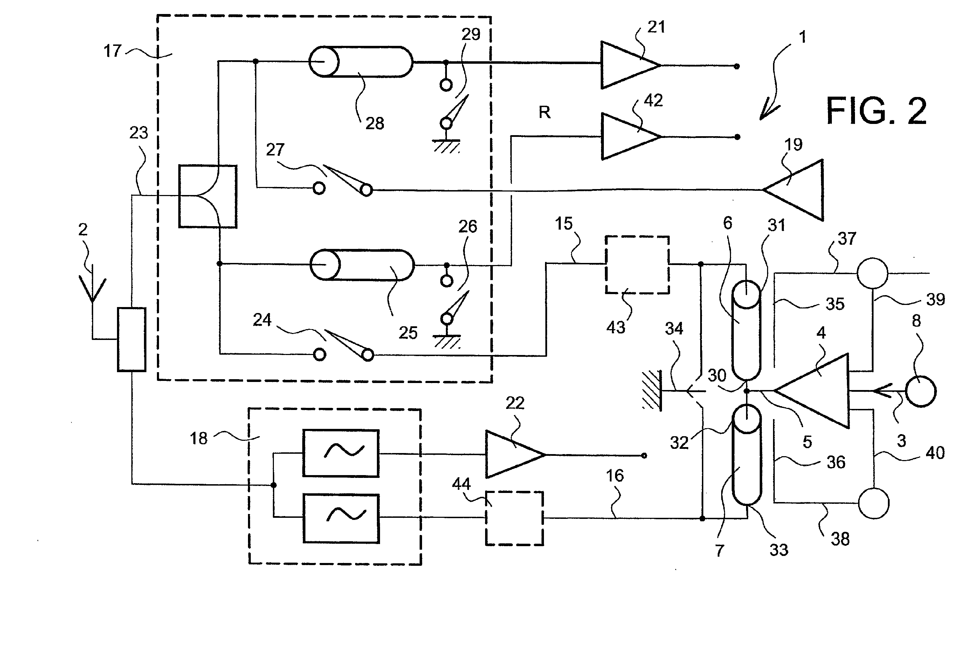

En liaison avec la figure 2 il sera décrit ci-après un mode de réalisation d'un téléphone portable 1 selon l'invention. Dans la figure 2, tous les éléments ayant même fonction que ceux décrits en liaison avec la figure 1, porte le même numéro de référence. Il s'ensuit que toute la partie gauche de la figure 2 comportant les premier 17 et second 18 circuits d'antenne sont identiques à la partie gauche décrite en relation avec la figure 1. Conformément à l'invention, les amplificateurs 9 et 12 de l'art antérieur sont remplacés par un amplificateur unique 4. Cet amplificateur reçoit au travers d'une entrée 3, le signal en provenance d'une source 8. Cette source 8 peut être par exemple une source d'un signal analogique constituée par un microphone ou une source d'un signal numérique.

La sortie 5 de l'amplificateur 4 est connectée d'une part, à une première ligne quart d'onde 6 et, d'autre part, à une seconde ligne quart d'onde 7, les lignes quart d'onde 6 et 7 ont des entrées 30, 32 respectivement et des sorties 31, 33 respectivement. Les sorties 31, 33 sont couplées à l'entrée 15 du premier circuit d'antenne 17 et à l'entrée 16 du second circuit d'antenne 18 respectivement. Les sorties 31, 33 des lignes quart d'onde 6, 7, sont également couplées à des moyens de commutation 34. Les moyens de commutation 34 permettent de mettre en court-circuit soit la première ligne quart d'onde 6, soit la seconde ligne quart d'onde 7.

Sur la figure 2, la position de l'interrupteur 34 a été représentée dans chacune des trois positions possible de connexion, court-circuit de l'une des lignes 5 ou 6, ou non court-circuit de l'une et l'autre lignes.

Les moyens de commutation 34 sont commandés par des moyens non représentés, par exemple, par une sortie logique d'un microprocesseur ayant une entrée lui indiquant le mode de fonctionnement du téléphone portable. Selon une première variante de réalisation, des moyens de couplage 35, 36 respectivement permettent de coupler la sortie 5 de l'amplificateur 4 a des entrées de commande 39, 40 respectivement dudit amplificateur 4 au travers de boucles de régulation 37, 38 respectivement.

Selon une seconde variante de réalisation, des adaptateurs d'impédance 43, 44 représentés en pointillé sont placés en aval de chacune des sorties 31, 33 respectivement des lignes quart d'onde 6, 7, et en amont de chacune des entrées 15, 16 des circuits 17, 18 respectivement.

Les adaptateurs 43, 44 permettent à l'amplificateur 4 de fonctionner par exemple sur une impédance de sortie de 50Ω quelle que soit la fréquence de fonctionnement sélectionnée. Ainsi, dans l'exemple commenté, l'adaptateur 43 permet une optimisation de la puissance délivrée lorsque l'amplificateur 4 fonctionne en DCS à 1800 MHz et l'adaptateur 44 permet cette optimisation lors du fonctionnement UMTS à 2000 MHz.

Naturellement, il est possible d'adapter le fonctionnement pour l'une des fréquences et de ne prévoir qu'un seul adaptateur 43 ou 44 pour l'autre fréquence.

## Revendications

1. Téléphone portable (1) multimode comportant une antenne (2) d'émission réception un premier amplificateur (9) d'émission ayant une entrée (10) couplée à une source (8) et amplifiant un signal en provenance de ladite source analogique ou numérique (8) et une sortie (11) couplée à une entrée (15) d'un premier circuit (17) d'antenne couplé à ladite antenne (2), au moins un second amplificateur (12) d'émission ayant une entrée (13) couplée à ladite source pour recevoir le signal en provenance de ladite source (8) et une sortie (14) couplée à une entrée (16) d'un... second circuit (18) d'antenne couplé à ladite antenne, l'antenne (12) recevant ou émettant des signaux vers le premier (17) et le second (18) circuits d'antenne, téléphone portable (1) **caractérisé en ce que** le premier (9) et le second (12) amplificateurs sont confondus en un amplificateur (4) unique et qu'une sortie (5) dudit amplificateur (4) unique est couplée aux entrées (15,16) desdits premier (17) et second (18) circuits d'antenne respectivement par l'intermédiaire d'une ligne (6,7) quart d'onde ayant chacune une entrée (30,32) et une sortie (31,33), ladite entrée (30,32) de chacune des lignes (6,7) quart d'onde étant couplée à la sortie (5) dudit amplificateur (4) unique, la sortie de chacune (31,33) de ces lignes (6,7) quart d'onde étant couplée respectivement aux entrées (15,16) desdits premier (17) et second (18) circuits d'antenne, et à un moyen (34) commandable de mise en court circuit de l'une ou de l'autre des deux lignes (6,7) quart d'onde.

2. Téléphone portable (1) selon la revendication 1, **caractérisé en ce que** l'une au moins des lignes (6,7) quart d'onde couplées entre la sortie (5) dudit amplificateur (4) unique et l'entrée (15,16) de l'un (17) ou l'autre (18) des circuits d'antenne est couplée à un coupleur (35,36) appartenant à une boucle (37,38) de retour de contrôle automatique du gain dudit amplificateur (4) unique.

3. Téléphone portable (1) selon l'une quelconque des revendications 1 ou 2, **caractérisé en ce qu'**en outre un adaptateur d'impédance . (43, 44) est couplé entre l'une des sorties (31, 33) de ligne quart d'onde (6, 7) dont l'entrée (30, 32) est couplée à la sortie (5) de l'amplificateur (4) et une entrée (15, 16) de l'un des circuits (17, 18) d'antenne.

4. Téléphone portable (1) selon l'une quelconque des revendications 1 ou 2, **caractérisé en ce qu'**un adaptateur d'impédance (43, 44) est couplé entre chacune des sorties (31, 33) de ligne quart d'onde (6, 7) dont l'entrée (30, 33) est couplée à la sortie (5) de l'amplificateur (4) unique et chacune des entrées (15, 16) des circuits (17, 18) d'antenne.
